# EUROPEAN PATENT SPECIFICATION

(11) **EP 3 466 155 B1**
(45) Date of publication and mention of the grant of the patent: **06.01.2021**
(21) Application number: 17707826.8
(22) Date of filing: 27.02.2017
(51) Int. Cl.: H04W 36/00

(54) **HANDLING OF BEAM LINK FAILURE**
BEHANDLUNG VON STRAHLFUNKVERBINDUNGSFEHLERN
GESTION DE DÉFAILLANCE DE LA LIAISON FAISCEAU

(43) Date of publication of application: 10.04.2019
(73) Proprietor: Telefonaktiebolaget LM Ericsson (publ), 164 83 Stockholm (SE)
(72) Inventor: NILSSON, Andreas, 413 13 Göteborg (SE); REIAL, Andres, 211 17 Malmö (SE); PETERSSON, Sven, 433 69 Sävedalen (SE); ATHLEY, Fredrik, 429 30 Kullavik (SE)
(74) Representative: Ericsson
(86) International application number: PCT/EP2017/054477
(87) International publication number: WO 2018/153496

(56) References cited:
- US-A1- 2014 153 423
- US-A1- 2016 087 877
- INTEL CORPORATION: "Discussion on beam recovery in NR", 3GPP DRAFT; R1-1611982 DISCUSSION ON BEAM RECOVERY IN NR R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051175946, Retrieved from the Internet: URL:http://www.3gpp.org/ftp/Meetings_3GPP_ SYNC/RAN1/Docs/ [retrieved on 2016-11-13]
- NTT DOCOMO ET AL: "Views on mechanism to recover from beam failure", 3GPP DRAFT; R1-1702799 BEAM RECOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209944, Retrieved from the Internet: URL:http://www.3gpp.org/ftp/Meetings_3GPP_ SYNC/RAN1/Docs/ [retrieved on 2017-02-12]
- SONY: "RRC diversity", 3GPP DRAFT; R2-1700140 NR RRC DIVERSITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210725, Retrieved from the Internet: URL:http://www.3gpp.org/ftp/Meetings_3GPP_ SYNC/RAN2/Docs/ [retrieved on 2017-01-17]
- SAMSUNG: "Robust design to support various spectrums in NR", 3GPP DRAFT; R2-166653 ROBUST DESIGN TO SUPPORT VARIOUS SPECTRUMS IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Kaohsiung, Taiwan; 20161010 - 20161014 9 October 2016 (2016-10-09), XP051151138, Retrieved from the Internet: URL:http://www.3gpp.org/ftp/Meetings_3GPP_ SYNC/RAN2/Docs/ [retrieved on 2016-10-09]
- ITRI: "Control plane signalling transport for LTE-NR tight interworking", 3GPP DRAFT; R2-1701344 CONTROL PLANE SIGNALLING TRANSPORT FOR LTE-NR TIGHT INTERWORKING, 3RD GENERATION PARTNERSHIP PROJECT (3GPP), MOBILE COMPETENCE CENTRE ; 650, ROUTE DES LUCIOLES ; F-06921 SOPHIA- , vol. RAN WG2, no. Athens, Greece; 20170213 - 20170217 12 February 2017 (2017-02-12), XP051212008, Retrieved from the Internet: URL:http://www.3gpp.org/ftp/Meetings_3GPP_ SYNC/RAN2/Docs/ [retrieved on 2017-02-12]
- NOKIA ALCATEL-LUCENT SHANGHAI BELL: "RRM Requirements supporting NR beam management", 3GPP DRAFT; R4-1610329 BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Reno, USA; 20161114 - 20161118 14 November 2016 (2016-11-14), XP051180431, Retrieved from the Internet: URL:http://www.3gpp.org/ftp/Meetings_3GPP_ SYNC/RAN4/Docs/ [retrieved on 2016-11-14]

## Description

### TECHNICAL FIELD

Embodiments presented herein relate to a method, a network node, and a computer program for handling beam link failure. Embodiments presented herein further relate to a method, a wireless device, and a computer program for operation during beam link failure.

### BACKGROUND

In communications networks, there may be a challenge to obtain good performance and capacity for a given communications protocol, its parameters and the physical environment in which the communications network is deployed.

For example, for future generations of mobile communications systems frequency bands at many different carrier frequencies could be needed. For example, low such frequency bands could be needed to achieve sufficient network coverage for users (e.g. wireless devices) and higher frequency bands (e.g. at millimeter wavelengths (mmW), i.e. near and above 30 GHz) could be needed to reach required network capacity. In general terms, at high frequencies the propagation properties of the radio channel are more challenging and beamforming both at the network-side (e.g. at transmission points or access nodes) and at the user-side might be required to reach a sufficient link budget.

In mobile communications systems, such as the fifth generation mobile communications system (denoted 5G or NR, where NR is short for new radio), based on a beam centric design, which means that the traditional cell concept is relaxed and served wireless devices will in many cases be connected to, and perform handover between, narrow beams instead of cells. Hence, mobility of a wireless device may occur between beams both within the same transmission point (TRP) and between TRPs. At higher frequencies, where high-gain beamforming could be needed due to challenging radio propagation channel properties, each beam will only be optimal within a small served area and the link budget outside the optimal beam will deteriorate quickly. Hence, frequent and fast beam switching might be needed to maintain high performance, so called beam management. Due to high penetration loss through objects and poor diffraction around object edges at high frequencies the link between a TRP and a wireless device will be sensitive to interference such as blocking. Blocking can occur either slowly/gradually or suddenly, depending for example on the speed of movement of the wireless device and the motion of objects in the physical environment between the TRP and the wireless device. The narrower the beams and the higher the carrier frequency, the higher probability there is for sudden blocking or other type of interference to occur.

In case the TRP notices a slow blocking (or other type of interference) of the active link, the TRP can try to find a backup link to the wireless device by transmitting signals on the active link to the wireless device before it is lost (either by sending a switch command to a previously known backup link or sending control signaling that sets up a beam search procedure for the wireless device to find a new active link). However, in case the blocking (or other type of interference) is too sudden the TRP might not have sufficient time to transmit these signals to the wireless device and the active link used for control and data signals between TRP and wireless device will be lost, thus resulting in a beam link failure (BLF). This will negatively affect the performance of the mobile communications system.

If the beam link failure cannot be handled properly and the link between the TRP and the wireless device is not restored within a certain period of time, it is expected that the wireless device will experience something similar to a radio link failure (RLF) as defined in the Long Term Evolution (LTE) series of telecommunication standards. RLF in LTE requires Layer 3 signaling and introduces both overhead signaling and latency, again negatively affect the performance of the mobile communications system.

INTEL CORPORATION: "Discussion on beam recovery in NR", 3GPP draft, relates to NR support mechanism(s) in the case of ling failure and/or blockage for NR, and support at least for network triggered aperiodic beam reporting, and discusses network initiated beam recovery as well as UE initiated beam recovery.

NTT DOCOMO ET AL: "Views on mechanism to recover from beam failure", 3GPP draft, recognizes that in NR-MIMO it is important how to recover the beam pair link quickly and appropriately when beam failure happens, and proposes mechanisms to recover from beam failure.

SONY: "RRC diversity", 3GPP draft, discusses the necessity to introduce RRC diversity (both downlink and uplink) for LTE-NR tight interworking.

US 2016/087877 A1 discloses a procedure for transmission beam failure handling in a wireless network, where a serving base station, upon detection of a beam link failure with a UE, sends control signalling to the UE via a neighbouring base station having a supplemental link with the UE. The control signalling is send to the neighbouring base station via a backhaul link between the serving and the neighbour base station.

US 2014/153423 A1 relates to wireless communication in a multi-beam environment, where in case there is an obstacle in the line-of-sight between a serving base station and a UE, the base station may communicate with the UE via one or more relay stations, wherein the communication via the relay stations includes control signalling.

Hence, there is still a need for an improved handling of beam link failures to maintain high and reliable performance for the wireless devices, for example such that the number of RLFs is reduced.

### SUMMARY

The invention is defined by the independent claims. The dependent claims define preferred embodiments of the invention.

According to a first aspect there is presented a method for handling beam link failure. The method is performed by a network node. The method comprises detecting a beam link failure of a direct radio link between a transmission point of the network node and a first wireless device. The first wireless device is served by the transmission point on the direct radio link and has an indirect radio link to the transmission point via a second wireless device. The method comprises configuring, in response to detecting the beam link failure, the first wireless device with control signalling using the indirect radio link.

According to a second aspect there is presented a network node for handling beam link failure. The network node comprises processing circuitry. The processing circuitry is configured to cause the network node to detect a beam link failure of a direct radio link between a transmission point of the network node and a first wireless device. The first wireless device is served by the transmission point on the direct radio link and has an indirect radio link to the transmission point via a second wireless device. The processing circuitry is configured to cause the network node to configure, in response to detecting the beam link failure, the first wireless device with control signalling using the indirect radio link.

According to a third aspect there is presented a network node for handling beam link failure. The network node comprises processing circuitry and a storage medium. The storage medium stores instructions that, when executed by the processing circuitry, cause the network node to perform operations, or steps. The operations, or steps, cause the network node to detect a beam link failure of a direct radio link between a transmission point of the network node and a first wireless device. The first wireless device is served by the transmission point on the direct radio link and has an indirect radio link to the transmission point via a second wireless device. The operations, or steps, cause the network node to configure, in response to detecting the beam link failure, the first wireless device with control signalling using the indirect radio link.

According to a fourth aspect there is presented a network node for handling beam link failure. The network node comprises a detect module configured to detect a beam link failure of a direct radio link between a transmission point of the network node and a first wireless device. The first wireless device is served by the transmission point on the direct radio link and has an indirect radio link to the transmission point via a second wireless device. The network node comprises a configure module configured to configure, in response to detecting the beam link failure, the first wireless device with control signalling using the indirect radio link.

According to a fifth aspect there is presented a computer program for handling beam link failure. The computer program comprises computer program code which, when run on processing circuitry of a network node, causes the network node to perform a method according to the first aspect.

According to a sixth aspect there is presented a method for operation during beam link failure. The method is performed by a first wireless device. The method comprises establishing a direct radio link between the first wireless device and a transmission point of a network node for the network node to serve the first wireless device on the direct radio link. The method comprises establishing an indirect radio link to the transmission point via a second wireless device. The method comprises receiving control signalling on the indirect radio link from the network node upon a beam link failure of the direct radio link.

According to a seventh aspect there is presented a wireless device for operation during beam link failure. The wireless device comprises processing circuitry. The processing circuitry is configured to cause the wireless device to establish a direct radio link between the wireless device and a transmission point of a network node for the network node to serve the wireless device on the direct radio link. The processing circuitry is configured to cause the wireless device to establish an indirect radio link to the transmission point via a second wireless device. The processing circuitry is configured to cause the wireless device to receive control signalling on the indirect radio link from the network node upon a beam link failure of the direct radio link.

According to an eighth aspect there is presented a wireless device for operation during beam link failure. The wireless device comprises processing circuitry and a storage medium. The storage medium stores instructions that, when executed by the processing circuitry, cause the wireless device to perform operations, or steps. The operations, or steps, cause the wireless device to establish a direct radio link between the wireless device and a transmission point of a network node for the network node to serve the wireless device on the direct radio link. The operations, or steps, cause the wireless device to establish an indirect radio link to the transmission point via a second wireless device. The operations, or steps, cause the wireless device to receive control signalling on the indirect radio link from the network node upon a beam link failure of the direct radio link.

According to a ninth aspect there is presented a wireless device for operation during beam link failure. The wireless device comprises an establish module configured to establish a direct radio link between the wireless device and a transmission point of a network node for the network node to serve the wireless device on the direct radio link. The wireless device comprises an establish module configured to establish an indirect radio link to the transmission point via a second wireless device. The wireless device comprises a receive module configured to receive control signalling on the indirect radio link from the network node upon a beam link failure of the direct radio link.

According to a tenth aspect there is presented a computer program for operation during beam link failure, the computer program comprising computer program code which, when run on processing circuitry of a wireless device, causes the wireless device to perform a method according to the sixth aspect.

According to an eleventh aspect there is presented a computer program product comprising a computer program according to at least one of the fifth aspect and the tenth aspect and a computer readable storage medium on which the computer program is stored. The computer readable storage medium could be a non-transitory computer readable storage medium.

Advantageously these methods, these network nodes, these wireless devices, and these computer programs provide efficient handling of beam link failures.

Advantageously these methods, these network nodes, these wireless devices, and these computer programs provide a recovery mechanism that does not require a link establishment from scratch, thus avoiding slow and costly random access and Layer 3 procedures.

It is to be noted that any feature of the first, second, third, fourth, fifth, sixth seventh, eight, ninth, tenth and eleventh aspects may be applied to any other aspect, wherever appropriate. Likewise, any advantage of the first aspect may equally apply to the second, third, fourth, fifth, sixth, seventh, eight, ninth, tenth, and/or eleventh aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2, 3, 4, 5, and 6 are flowcharts of methods according to embodiments;
Fig. 7 is a schematic diagram showing functional units of a network node according to an embodiment;
Fig. 8 is a schematic diagram showing functional modules of a network node according to an embodiment;
Fig. 9 is a schematic diagram showing functional units of a wireless device according to an embodiment;
Fig. 10 is a schematic diagram showing functional modules of a wireless device according to an embodiment; and
Fig. 11 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

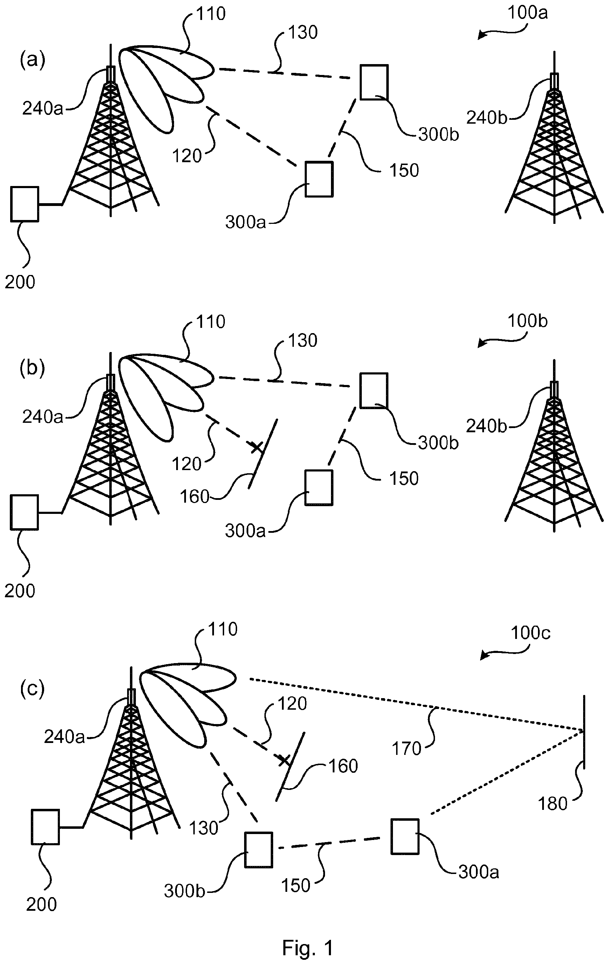

Fig. 1 is a schematic diagram illustrating a communications network 100a, 100b, 100c where embodiments presented herein can be applied. The communications network 100a, 100b, 100c comprises a network node 200, one or more TRPs 240a, 240b, and two or more wireless devices 300a, 300b.

The network node 200 could be any of a radio access network node, radio base station, base transceiver station, node B, evolved node B, access point, or access node.

Each wireless device 300a, 300b could be any of a portable wireless device, mobile station, mobile phone, handset, wireless local loop phone, user equipment (UE), smartphone, laptop computer, tablet computer, wireless modem, wireless sensor device, Internet-of-Things (IoT) device, or network-equipped vehicle.

The TRPs 240a, 240b communicate with the wireless devices 300a, 300b by transmitting and receiving radio signals in beams 110. The wireless devices 300a, 300b are configured to direct communication between each other using so-called device-to-device (D2D) communications. In general terms, D2D communications is a radio technology that enables devices to communicate directly with each other, without letting the data pass through another network node, entity, or device. Some aspects of D2D communications have been specified by the third generation partnership program (3GPP) in LTE Rel-12. Network controlled D2D communications generally refers to D2D communications where the network, such as the network node 200, controls and assists the operation of D2D links using in-band spectrum (i.e. the same spectrum used for communication between the TRPs 240a, 240b and the wireless devices 300a, 300b). However, the D2D communications as used herein does not need to be based on standardization in 3GPP relating to D2D communications, but could instead be based on other radio communications standards, such as Bluetooth or standards for wireless local area networks (WLAN) as specified in IEEE 802.11.

Fig. i(a) illustrates a scenario where two wireless devices 300a, 300b are operatively connected to the TRP 240a through two different radio links 120, 130. There is also a D2D link 150 between the wireless devices 300a, 300b which could be assisted by the network. The D2D link 150 might be used for data or just monitored by the network as a backup link in case there should be a beam link failure on any of the radio links 120, 130 to any of the wireless devices 300a, 300b. That is, wireless device 300a is served by the TRP 240a on a direct radio link 120 and has an indirect radio link (defined by the radio link 130, and the D2D link 150) to the TRP 240a via wireless device 300b. Likewise, wireless device 300b is served by the TRP 240a on a direct radio link 130 and has an indirect radio link (defined by the radio link 120, and the D2D link 150) to the TRP 240a via wireless device 300a.

Fig. i(b) illustrates a scenario where there is a beam link failure of the direct radio link 120 due to blocking as caused by a physical object 160. The beam link failure results in that the network node 200 and the wireless device 300a are not being able to communicate directly with each other via the TRP 240a anymore. It is hence not possible for the network node 200 to directly with the wireless device 300a set up a new beam finding procedure to find a new target link to restore the connection. As disclosed above, if not handled properly this beam link failure will result in a radio link failure. As will be disclosed in detail below, the network node 200 therefore configures the wireless device 300a with control signalling using the indirect radio link 130, 150 as soon as having detected the beam link failure.

Fig. i(c) illustrates a scenario similar to Fig. i(b) but where there is only one single TRP 240a and where the network node 200 and the wireless device 300a are, via the TRP 240a, communicating using two beam pair links, a first of which is defined by radio link 120 and a second of which is defined by radio link 170, where the propagation path of radio link 170 is reflected by a physical object 180. In general terms, a beam pair link has a transmission beam 110 at the TRP 240a and a corresponding reception beam at the wireless device 300a. Reception beams pointing in multiple directions (such as in a respective direction for each radio link 120, 170) can be used in case the wireless device 300a has an analog beamformer, but where the wireless device 300a only can use one reception beam at a time and thus only direct its reception beam towards one of the transmission beams at a time. In the illustrative example of Fig. i(c) there are two BPLs, where radio link 120 defines an active beam pair link and is used for transmission of control signaling and data signaling, and where radio link 170 defines a monitored (backup) beam pair link that can be switched to in case the active link fails. In order to switch from the current active link to the monitored link, a beam switch command has to be transmitted from the network node 200 to the wireless device 300a. In case a sudden BLF of the active radio link 200 occurs, such as illustrated by the blocking of the physical object 160 in Fig. i(c), the network node 200 may not have sufficient time to transmit such a beam switch command. According to the herein disclosed embodiments, and as will be further disclosed below, the network node 200 therefore configures the wireless device 300a with control signalling using the indirect radio link 130, 150 as soon as having detected the beam link failure.

The embodiments disclosed herein thus relate to mechanisms for handling beam link failure and operation during beam link failure. In order to obtain such mechanisms there is provided a network node 200, a method performed by the network node 200, a computer program product comprising code, for example in the form of a computer program, that when run on processing circuitry of the network node 200, causes the network node 200 to perform the method. In order to obtain such mechanisms there is further provided a wireless device 300a, a method performed by the wireless device 300a, and a computer program product comprising code, for example in the form of a computer program, that when run on processing circuitry of the wireless device 300a, causes the wireless device 300a to perform the method.

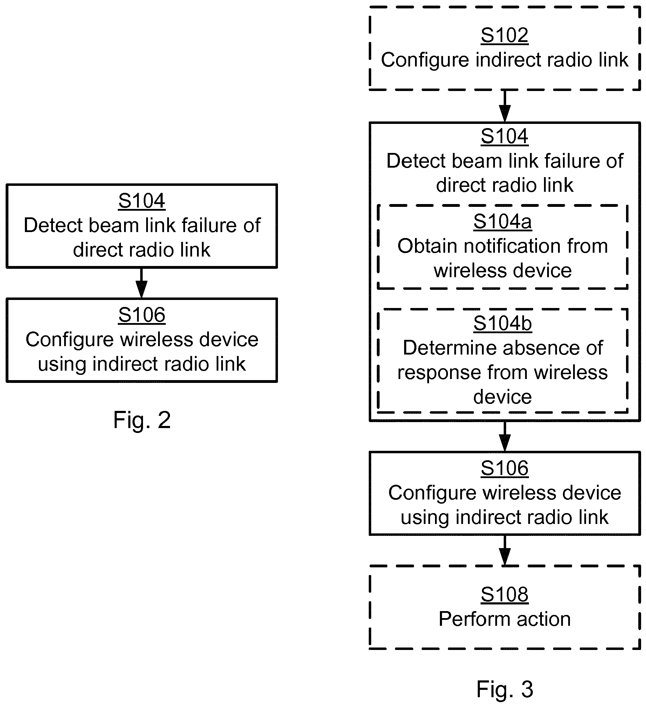

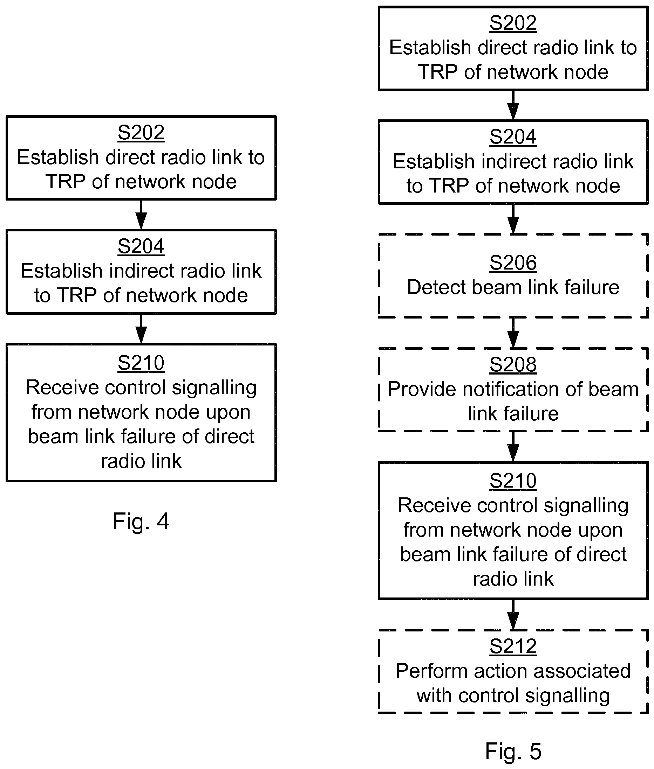

Figs. 2 and 3 are flowcharts illustrating embodiments of methods for handling beam link failure as performed by the network node 200. Figs. 4 and 5 are flowcharts illustrating embodiments of methods for operation during beam link failure as performed by the wireless device 300a. The methods are advantageously provided as computer programs 1120a, 1120b.

Reference is now made to Fig. 2 illustrating a method for handling beam link failure as performed by the network node 200 according to an embodiment.

For ease of notation the wireless device 300a will hereinafter be denoted a first wireless device and the wireless device 300b will hereinafter be denoted a second wireless device. However, this does not imply that there is any hierarchical relation between the wireless devices 300a, 300b.

S104: The network node 200 detects a beam link failure of a direct radio link 120 between a TRP 240a of the network node 200 and a first wireless device 300a. The first wireless device 300a is served by the TRP 240a on the direct radio link 120 and has an indirect radio link 130, 150 to the TRP 240a via a second wireless device 300b.

S106: The network node 200 configures, in response to detecting the beam link failure, the first wireless device 300a with control signalling using the indirect radio link 130, 150.

Advantageously this method provides efficient handling of beam link failures.

Advantageously this method provides a recovery mechanism that does not require a link establishment from scratch, thus avoiding slow and costly random access and Layer 3 procedures.

Embodiments relating to further details of handling beam link failure as performed by the network node 200 will now be disclosed.

Reference is now made to Fig. 3 illustrating methods for handling beam link failure as performed by the network node 200 according to further embodiments. It is assumed that steps S104, S106 are performed as described above with reference to Fig. 2 and a thus repeated description thereof is therefore omitted.

In some aspects the indirect radio link 130, 150 is a network assisted D2D link and is configured by the network node 200. Hence, according to an embodiment the network node 200 is configured to perform step S102:
S102: The network node 200 configures the indirect radio link 130, 150 between the first wireless device 300a and the second wireless device 300b.

In some aspects the indirect radio link 130, 150 is configured before the network 200 detects the beam link failure of the direct radio link 120. This will reduce the latency between detecting the beam link failure in step S204 and configuring the first wireless device 300a with control signalling using the indirect radio link 130, 150 in step S106. In other aspects the indirect radio link 130, 150 is configured upon the network 200 detects the beam link failure of the direct radio link 120. This will reduce the use of potentially unnecessary radio resources needed to set up the indirect radio link 130, 150 in case there is no beam link failure.

There may be different ways for the network node 200 to detect the beam link failure in step S104.

In some aspects the detection is based on receiving a notification of the beam link failure from the first wireless device 300a. Hence, according to an embodiment the network node 200 is configured to perform step S104a as part of detecting the beam link failure in step S104:
S104a: The network node 200 obtains a notification of the beam link failure from the first wireless device 300a on the indirect radio link 130, 150 via the second wireless device 300b.

In some aspects the detection is based on lack of an expected response (such as an acknowledgement or a negative acknowledgement, or a report that the first wireless device 300 is to be transmitted to the network node 200, etc.) from the first wireless device 300a on the direct radio link 120. Hence, according to an embodiment the network node 200 is configured to perform step S104b as part of detecting the beam link failure in step S104:
S104b: The network node 200 determines absence of a response from the first wireless device 300a on the direct radio link 120.

There may be different ways for the network node 200 to act upon having configured the first wireless device 300a with control signalling in step S108. In some aspects the network node 200 performs an action for the first wireless device 300a. Hence, according to an embodiment the network node 200 is configured to perform step S108:
S108: The network node 200 performs an action for the first wireless device 300a. The action is associated with the control signalling.

There could be different types of actions performed in step S108. Examples of such actions will be disclosed below.

Reference is now made to Fig. 4 illustrating a method for operation during beam link failure as performed by the first wireless device 300a according to an embodiment.

S202: The first wireless device 300a establishes a direct radio link 120 between the first wireless device 300a and a TRP 240a of a network node 200 for the network node 200 to serve the first wireless device 300a on the direct radio link 120.

S204: The first wireless device 300a establishes an indirect radio link 130, 150 to the TRP 240a via a second wireless device 300b.

S210: The first wireless device 300a receives control signalling on the indirect radio link 130, 150 from the network node 200 upon a beam link failure of the direct radio link 120.

Advantageously this method provides efficient handling of beam link failures.

Advantageously this method provides a recovery mechanism that does not require a link establishment from scratch, thus avoiding slow and costly random access and Layer 3 procedures.

Embodiments relating to further details of operation during beam link failure as performed by the first wireless device 300a will now be disclosed.

Reference is now made to Fig. 5 illustrating methods for operation during beam link failure as performed by the first wireless device 300a according to further embodiments. It is assumed that steps S204, S206, S210 are performed as described above with reference to Fig. 4 and a thus repeated description thereof is therefore omitted.

In some aspects the first wireless device 300a notices the beam link failure before the network node 200 does, and signals this to the network node 200 via the D2D link 150. Hence, according to an embodiment the first wireless device 300a is configured to perform steps S206 and S208:
S206: The first wireless device 300a detects the beam link failure of the direct radio link 120.

S208: The first wireless device 300a provides, in response to detecting the beam link failure (as in step S206), a notification of the beam link failure to the network node 200 on the indirect radio link 130, 150 via the second wireless device 300b.

As disclosed above, in some aspects the network node 200 performs an action for the first wireless device 300a upon having configured the first wireless device 300a with control signalling in step S108. Likewise, in some aspects the first wireless device 300a performs an action upon having been configured with control signalling in step S210. Hence, according to an embodiment the first wireless device 300a is configured to perform step S212:
S212: The first wireless device 300a performs an action associated with the control signalling.

The action is associated with the control signalling.

Embodiments applicable to both the methods performed by the network node 200 and the first wireless device 300a will now be disclosed.

There may be different actions for the network node 200 to perform in step S108 and for the first wireless device 300a to perform in step S212. Commonly, the respective actions are associated with the control signalling. Thus, before providing example of actions to be performed in steps S108 and S212, aspects of the control signalling will be given.

In some aspects, the control signaling comprises information about a beam searching procedure that will be used to try to restore the connection between the TRP 240a and the first wireless device 300a, information about the first wireless device 300a switching to a backup link (as in Fig. 1(c)), information about ordering a handover to a previously determined target TRP 240b, or information about initiating a mobility measurement and/or reporting procedure to determine a reasonable target TRP 240b and then hand over the first wireless device 300a to the target TRP 240b. Thus, according to an embodiment the control signalling relates to the first wireless device 300a initiating at least one of mobility measurements of a beam finding procedure, a handover, and/or exchange of data with the TRP 240a using the indirect radio link 130, 150. The handover is either to another beam of the TRP 240a or to a beam of another TRP 240b.

In a case where the network node 200 already has determined a suitable target link/beam, e.g. based on recent mobility measurements, the network node 200 could configure the the first wireless device 300a to perform a handover to that link, thus avoiding the first wireless device 300a to perform a beam finding procedure.

In a case where the beam searching procedure fails to determine a new suitable target link, the wireless device 300 can continue to use the indirect radio link 130, 150 to receive both control signals and data signals as long as the network allows, or until another beam finding procedure is successful. Data exchange with the TRP 240a using the indirect radio link 130, 150 is in some aspects thus only performed if the beam searching procedure or the handover fails. Hence, according to an embodiment the control signalling instructs the first wireless device 300a to exchange of data with the network node 200 using the indirect radio link 130, 150 only in case of failed mobility measurements or failed handover.

Thus, in case the network node 200 configured the first wireless device 300a in step S106 to initiate mobility measurements of a beam finding procedure, then the action performed in step S212 is setting up the beam finding procedure to enable the first wireless device 300a to perform the mobility measurements. Further, in case the network node 200 configured the first wireless device 300a in step S106 to perform a handover, then the action performed in step S108 is performing the handover of the first wireless device 300a (either to a new beam of the same TRP 240a or to another TRP 240b, or possibly even to another network node). Further, in case the network node 200 configured the first wireless device 300a in step S106 to exchange of data with the TRP 240a using the indirect radio link 130, 150, then the action performed in step S108 is exchanging data with the first wireless device 300a using the indirect radio link 130, 150.

Thus, in case the first wireless device 300a is configured in step S210 to initiate mobility measurements of a beam finding procedure, then the action performed in step S212 is performing the mobility measurements. Further, in case the first wireless device 300a is configured in step S210 to perform a handover, then the action performed in step S212 is performing the handover. Further, in case the first wireless device 300a is configured in step S210 to exchange of data with the TRP 240a using the indirect radio link 130, 150, then the action performed in step S212 is exchanging data with the TRP 240a using the indirect radio link 130, 150.

Blocking is only an example of a reason for beam link failure. Other reasons for beam link failure could for example be rotation and/or movement of the first wireless device 300a. Particularly, according to an embodiment the beam link failure is caused by at least one of movement of the first wireless device 300a, rotation of the first wireless device 300a, blocking of the direct radio link 120, and directed radio interference affecting the direct radio link 120.

Further, the beam link failure could occur for beams transmitting data and control signals or only one of data and control signals in case data and control signals are transmitted using different beams.

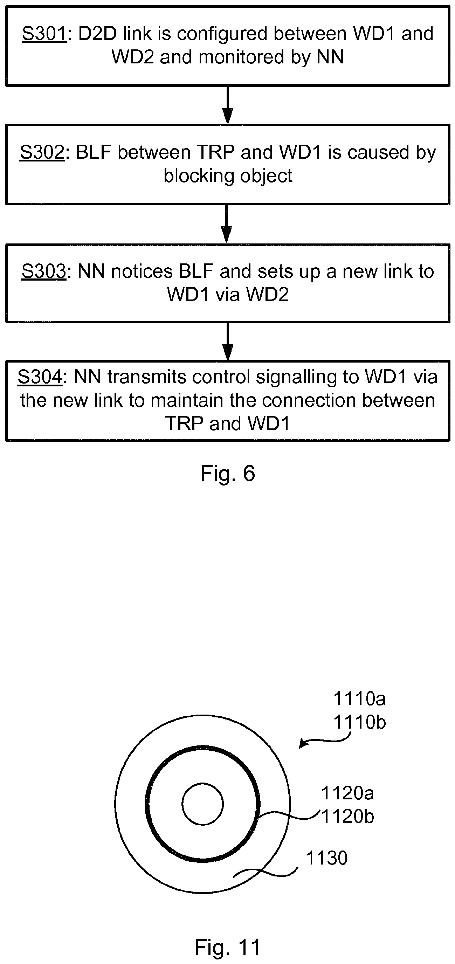

One particular embodiment, which is not covered by the claims, for handling beam link failure as performed by the network node 200 and operation during beam link failure as performed by the first wireless device 300a as based on at least some of the above disclosed embodiments will now be disclosed in detail with reference to the flowchart of Fig. 6. In Fig 6, NN is short for network node 200, WD1 is short for first wireless device 300a and WD2 is short for wireless device 300b. S301: A D2D link 150 is configured between first wireless device 300a and wireless device 300b and monitored by network node 200.

S302: A beam link failure of the direct radio link 120 between TRP 240a and first wireless device 300a is caused by a blocking object 160.

S303: The network node 200 notices the beam link failure and sets up a new indirect radio link 130, 150 to first wireless device 300a via wireless device 300b.

S304: The network node 200 transmits control signalling to first wireless device 300a via the indirect radio link 130a, 150, for example for first wireless device 300a to set up a new beam searching procedure, to maintain the connection between TRP 240a and first wireless device 300a.

In summary, according to at least some of the herein disclosed embodiments, the network node 200 detects a beam link failure for the first wireless device 300a and uses an indirect radio link for that first wireless device 300a for control signalling between the first wireless device 300a and the network, e.g. to set up a new beam finding procedure, switch to a backup link, order a handover to a previously determined target node, or to initiate a mobility measurement and/or reporting procedure to determine a reasonable target TRP 240b and hand over the first wireless device 300a to the target TRP 240b.

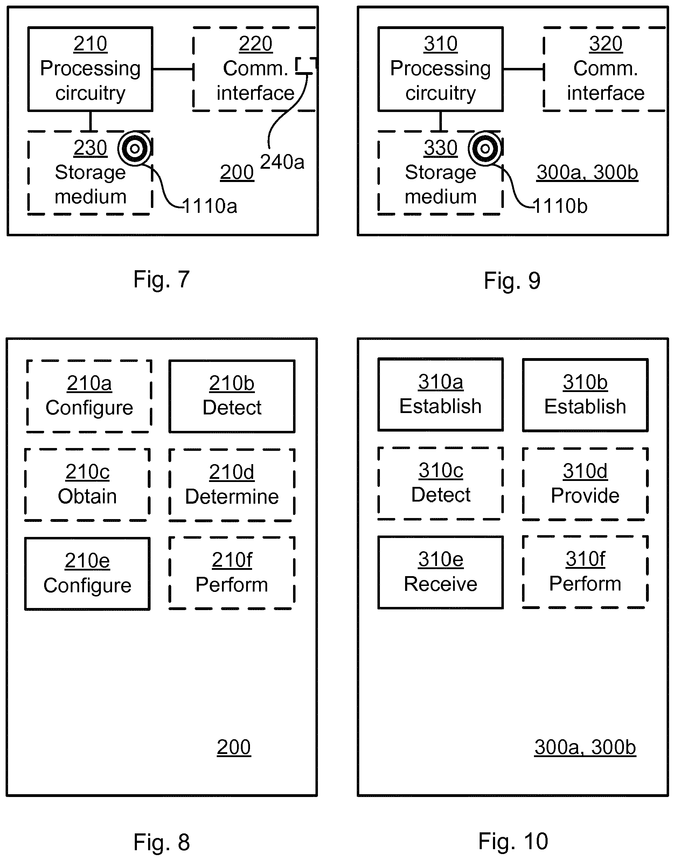

Fig. 7 schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1110a (as in Fig. 11), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, S102-S108, as disclosed above. For example, the storage medium 230 may store the set of operations, and the processing circuitry 210 may be configured to retrieve the set of operations from the storage medium 230 to cause the network node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The network node 200 may further comprise a communications interface 220 for communications with other nodes, entities, and devices of the communications network 100a, 100b, 100c. As such the communications interface 220 may comprise one or more transmitters and receivers, comprising analogue and digital components. The functionality of the TRP 240a could be co-located with, part of, or operatively connected to, the communications interface 220.

The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

Fig. 8 schematically illustrates, in terms of a number of functional modules, the components of a network node 200 according to an embodiment, which is not covered by the claims. The network node 200 of Fig. 8 comprises a number of functional modules; a detect module 210b configured to perform step S104 and a configure module 210e configured to perform step S106. The network node 200 of Fig. 8 may further comprise a number of optional functional modules, such as any of a configure module 210a configured to perform step S102, an obtain module 210c configured to perform step S104a, a determine module 210d configured to perform step S104b, and a perform module 210f configured to perform step S108. In general terms, each functional module 210a-210f may be implemented in hardware or in software. Preferably, one or more or all functional modules 210a-210f may be implemented by the processing circuitry 210, possibly in cooperation with the communications interface 220 and/or the storage medium 230. The processing circuitry 210 may thus be arranged to from the storage medium 230 fetch instructions as provided by a functional module 210a-210f and to execute these instructions, thereby performing any steps of the network node 200 as disclosed herein.

The network node 200 may be provided as a standalone device or as a part of at least one further device. For example, the network node 200 may be provided in a node of a radio access network or in a node of a core network. Alternatively, functionality of the network node 200 may be distributed between at least two devices, or nodes. These at least two nodes, or devices, may either be part of the same network part (such as the radio access network or the core network) or may be spread between at least two such network parts. Thus, a first portion of the instructions performed by the network node 200 may be executed in a first device, and a second portion of the of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 7 the processing circuitry 210 may be distributed among a plurality of devices, or nodes. The same applies to the functional modules 210a-210f of Fig. 8 and the computer program 1120a of Fig. 11 (see below).

Fig. 9 schematically illustrates, in terms of a number of functional units, the components of a wireless device 300a according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1110b (as in Fig. 11), e.g. in the form of a storage medium 330. The processing circuitry 310 may further be provided as at least one application specific integrated circuit (ASIC), or field programmable gate array (FPGA).

Particularly, the processing circuitry 310 is configured to cause the wireless device 300a to perform a set of operations, or steps, S202-S212, as disclosed above. For example, the storage medium 330 may store the set of operations, and the processing circuitry 310 may be configured to retrieve the set of operations from the storage medium 330 to cause the wireless device 300a to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The wireless device 300a may further comprise a communications interface 320 for communications with other nodes, entities, and devices of the communications network 100a, 100b, 100c. As such the communications interface 320 may comprise one or more transmitters and receivers, comprising analogue and digital components.

The processing circuitry 310 controls the general operation of the wireless device 300a e.g. by sending data and control signals to the communications interface 320 and the storage medium 330, by receiving data and reports from the communications interface 320, and by retrieving data and instructions from the storage medium 330. Other components, as well as the related functionality, of the wireless device 300a are omitted in order not to obscure the concepts presented herein.

Fig. 10 schematically illustrates, in terms of a number of functional modules, the components of a wireless device 300a according to an embodiment, which is not covered by the claims. The wireless device 300a of Fig. 10 comprises a number of functional modules; an establish module 310a configured to perform step S202, an establish module 310b configured to perform step S204, and a receive module 310e configured to perform step S210. The wireless device 300a of Fig. 10 may further comprise a number of optional functional modules, such as any of a detect module 310c configured to perform step S206, a provide module 310d configured to perform step S208, and a perform module 310f configured to perform step S212. In general terms, each functional module 310a-310f may be implemented in hardware or in software. Preferably, one or more or all functional modules 310a-310f may be implemented by the processing circuitry 310, possibly in cooperation with the communications interface 320 and/or the storage medium 330. The processing circuitry 310 may thus be arranged to from the storage medium 330 fetch instructions as provided by a functional module 310a-310f and to execute these instructions, thereby performing any steps of the wireless device 300a as disclosed herein.

Fig. 11 shows one example of a computer program product 1110a, 1110b comprising computer readable means 1130. On this computer readable means 1130, a computer program 1120a can be stored, which computer program 1120a can cause the processing circuitry 210 and thereto operatively coupled entities and devices, such as the communications interface 220 and the storage medium 230, to execute methods according to embodiments described herein. The computer program 1120a and/or computer program product 1110a may thus provide means for performing any steps of the network node 200 as herein disclosed. On this computer readable means 1130, a computer program 1120b can be stored, which computer program 1120b can cause the processing circuitry 310 and thereto operatively coupled entities and devices, such as the communications interface 320 and the storage medium 330, to execute methods according to embodiments described herein. The computer program 1120b and/or computer program product 1110b may thus provide means for performing any steps of the wireless device 300a as herein disclosed.

In the example of Fig. 11, the computer program product 1110a, 1110b is illustrated as an optical disc, such as a CD (compact disc) or a DVD (digital versatile disc) or a Blu-Ray disc. The computer program product 1110a, 1110b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1120a, 1120b is here schematically shown as a track on the depicted optical disk, the computer program 1120a, 1120b can be stored in any way which is suitable for the computer program product 1110a, 1110b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for handling beam link failure, the method being performed by a network node (200) being a radio base station, the method comprising:
detecting (S104) a beam link failure of a direct radio link (120) between a transmission point (240a) of the network node (200) and a first wireless device (300a) being a first user equipment, wherein the transmission point (240a) of the network node (200) serves the first wireless device (300a) on the direct radio link (120) and has an indirect radio link (130, 150) to the first wireless device (300a) via a second wireless device (300b) being a second user equipment, wherein the indirect radio link (130, 150) includes a direct link (130) between the transmission point (240a) and the second wireless device (300b) and a device-to-device link (150) between the second wireless device (300b) and the first wireless device (300a); and
configuring (S106), in response to detecting the beam link failure, the first wireless device (300a) with control signalling using the indirect radio link (130, 150).

2. The method according to claim 1, further comprising:
performing (S108) an action for the first wireless device (300a), wherein the action is associated with the control signalling.

3. The method according to claim 1 or 2, further comprising:
configuring (S102) the indirect radio link (130, 150) between the first wireless device (300a) and the second wireless device (300b) before detecting the beam link failure of the direct radio link (120).

4. The method according to any of the preceding claims, wherein detecting the beam link failure comprises:
obtaining (S104a) a notification of the beam link failure from the first wireless device (300a) on the indirect radio link (130, 150) via the second wireless device (300b).

5. The method according to any of claims 1 to 3, wherein detecting the beam link failure comprises:
determining (S104b) absence of a response from the first wireless device (300a) on the direct radio link (120).

6. A method for operation during beam link failure, the method being performed by a first wireless device (300a) being a first user equipment, the method comprising:
establishing (S202) a direct radio link (120) between the first wireless device (300a) and a transmission point (240a) of a network node (200) being a radio base station for the network node (200) to serve the first wireless device (300a) on the direct radio link (120);
establishing (S204) an indirect radio link (130, 150) to the transmission point (240a) via a second wireless device (300b) being a second user equipment, wherein the indirect radio link (130, 150) includes a direct link (130) between the transmission point (240a) and the second wireless device (300b) and a device-to-device link (150) between the second wireless device (300b) and the first wireless device (300a); and
receiving (S210) control signalling on the indirect radio link (130, 150) from the network node (200) upon a beam link failure of the direct radio link (120).

7. The method according to claim 6, further comprising:
performing (S212) an action associated with the control signalling.

8. The method according to claim 6 or 7, further comprising:
detecting (S206) the beam link failure of the direct radio link (120); and
providing (S208), in response to detecting the beam link failure, a notification of the beam link failure to the network node (200) on the indirect radio link (130, 150) via the second wireless device (300b).

9. The method according to any of the preceding claims, wherein the control signalling relates to the first wireless device (300a) initiating at least one of mobility measurements of a beam finding procedure, a handover, and/or exchange of data with the network node (200) using the indirect radio link (130, 150).

10. The method according to claim 9, wherein the handover is to another beam of the transmission point (240a) or to a beam of another transmission point (240b).

11. The method according to claim 9, wherein the control signalling instructs the first wireless device (300a) to exchange of data with the network node (200) using the indirect radio link (130, 150) only in case of failed mobility measurements or failed handover.

12. The method according to any of the preceding claims, wherein the beam link failure is caused by at least one of movement of the first wireless device (300a), rotation of the first wireless device (300a), blocking of the direct radio link (120), and directed radio interference affecting the direct radio link (120).

13. A network node (200) being a radio base station for handling beam link failure, the network node (200) comprising processing circuitry (210), the processing circuitry being configured to cause the network node (200) to:
detect a beam link failure of a direct radio link (120) between a transmission point (240a) of the network node (200) and a first wireless device (300a) being a first user equipment, wherein the transmission point (240a) of the network node (200) is configured to serve the first wireless device (300a) on the direct radio link (120) and have an indirect radio link (130, 150) to the first wireless device (300a) via a second wireless device (300b) being a second user equipment, wherein the indirect radio link (130, 150) includes a direct link (130) between the transmission point (240a) and the second wireless device (300b) and a device-to-device link (150) between the second wireless device (300b) and the first wireless device (300a); and
configure, in response to detecting the beam link failure, the first wireless device (300a) with control signalling using the indirect radio link (130, 150).

14. A wireless device (300a) for operation during beam link failure, the wireless device (300a) being a user equipment and comprising processing circuitry (310), the processing circuitry being configured to cause the wireless device (300a) to:
establish a direct radio link (120) between the wireless device (300a) and a transmission point (240a) of a network node (200) being a radio base station for the network node (200) to serve the wireless device (300a) on the direct radio link (120); to
establish an indirect radio link (130, 150) to the transmission point (240a) via a second wireless device (300b) being a second user equipment, wherein the indirect radio link (130, 150) includes a direct link (130) between the transmission point (240a) and the second wireless device (300b) and a device-to-device link (150) between the second wireless device (300b) and the first wireless device (300a); and
receive control signalling on the indirect radio link (130, 150) from the network node (200) upon a beam link failure of the direct radio link (120).

15. A computer program (1120a) for handling beam link failure, the computer program comprising computer code which, when run on processing circuitry (210) of a network node (200) being a radio base station, causes the network node (200) to:
detect (S104) a beam link failure of a direct radio link (120) between a transmission point (240a) of the network node (200) and a first wireless device (300a) being a first user equipment, wherein the transmission point (240a) of the network node (200) serves the first wireless device (300a) on the direct radio link (120) and has an indirect radio link (130, 150) to the first wireless device (300a) via a second wireless device (300b) being a second user equipment, wherein the indirect radio link (130, 150) includes a direct link (130) between the transmission point (240a) and the second wireless device (300b) and a device-to-device link (150) between the second wireless device (300b) and the first wireless device (300a); and
configure (S106), in response to detecting the beam link failure, the first wireless device (300a) with control signalling using the indirect radio link (130, 150).

16. A computer program (1120b) for operation during beam link failure, the computer program comprising computer code which, when run on processing circuitry (310) of a wireless device (300a) being a user equipment, causes the wireless device (300a) to:
establish (S202) a direct radio link (120) between the wireless device (300a) and a transmission point (240a) of a network node (200) being a radio base station for the network node (200) to serve the wireless device (300a) on the direct radio link (120);
establish (S204) an indirect radio link (130, 150) to the transmission point (240a) via a second wireless device (300b) being a second user equipment, wherein the indirect radio link (130, 150) includes a direct link (130) between the transmission point (240a) and the second wireless device (300b) and a device-to-device link (150) between the second wireless device (300b) and the first wireless device (300a); and
receive (S210) control signalling on the indirect radio link (130, 150) from the network node (200) upon a beam link failure of the direct radio link (120).

## Patentansprüche

1. Verfahren zum Behandeln von Strahlfunkverbindungsfehlern, wobei das Verfahren von einem Netzwerkknoten (200) durchgeführt wird, der eine Funkbasisstation ist, das Verfahren umfassend:
Erfassen (S104) eines Strahlfunkverbindungsfehlers einer direkten Funkverbindung (120) zwischen einem Sendepunkt (240a) des Netzwerkknotens (200) und einer ersten drahtlosen Vorrichtung (300a), die eine erste Benutzerausrüstung ist,
wobei der Sendepunkt (240a) des Netzwerkknotens (200) die erste drahtlose Vorrichtung (300a) auf der direkten Funkverbindung (120) bedient und eine indirekte Funkverbindung (130, 150) zu der ersten drahtlosen Vorrichtung (300a) über eine zweite drahtlose Vorrichtung (300b) hat, die eine zweite Benutzerausrüstung ist, wobei die indirekte Funkverbindung (130, 150) eine direkte Verbindung (130) zwischen dem Sendepunkt (240a) und der zweiten drahtlosen Vorrichtung (300b) und eine Vorrichtung-zu-Vorrichtung-Verbindung (150) zwischen der zweiten drahtlosen Vorrichtung (300b) und der ersten drahtlosen Vorrichtung (300a) beinhaltet; und
Konfigurieren (S106), in Antwort auf Erfassen des Strahlfunkverbindungsfehlers, der ersten drahtlosen Vorrichtung (300a) mit Steuersignalisierung unter Verwendung der indirekten Funkverbindung (130, 150).

2. Verfahren nach Anspruch 1, weiter umfassend:
Durchführen (S108) eines Vorgangs für die erste drahtlose Vorrichtung (300a), wobei der Vorgang mit der Steuersignalisierung verknüpft ist.

3. Verfahren nach Anspruch 1 oder 2, weiter umfassend:
Konfigurieren (S102) der indirekten Funkverbindung (130, 150) zwischen der ersten drahtlosen Vorrichtung (300a) und der zweiten drahtlosen Vorrichtung (300b) vor Erfassen des Strahlfunkverbindungsfehlers der direkten Funkverbindung (120).

4. Verfahren nach einem der vorstehenden Ansprüche, wobei Erfassen des Strahlfunkverbindungsfehlers umfasst:
Erhalten (S104a) einer Meldung des Strahlfunkverbindungsfehlers von der ersten drahtlosen Vorrichtung (300a) auf der indirekten Funkverbindung (130, 150) über die zweite drahtlose Vorrichtung (300b).

5. Verfahren nach einem der Ansprüche 1 bis 3, wobei Erfassen des Strahlfunkverbindungsfehlers umfasst:
Bestimmen (S104b) eines Fehlens einer Antwort von der ersten drahtlosen Vorrichtung (300a) auf der direkten Funkverbindung (120).

6. Verfahren für Betrieb während eines Strahlfunkverbindungsfehlers, wobei das Verfahren durch eine erste drahtlose Vorrichtung (300a) durchgeführt wird, die eine erste Benutzerausrüstung ist, wobei das Verfahren umfasst:
Errichten (S202) einer direkten Funkverbindung (120) zwischen der ersten drahtlosen Vorrichtung (300a) und einem Sendepunkt (240a) eines Netzwerkknotens (200), der eine Funkbasisstation für den Netzwerkknoten (200) ist, um die erste drahtlose Vorrichtung (300a) auf der direkten Funkverbindung (120) zu bedienen;
Errichten (S204) einer indirekten Funkverbindung (130, 150) zu dem Sendepunkt (240a) über eine zweite drahtlose Vorrichtung (300b), die eine zweite Benutzerausrüstung ist, wobei die indirekte Funkverbindung (130, 150) eine direkte Verbindung (130) zwischen dem Sendepunkt (240a) und der zweiten drahtlosen Vorrichtung (300b) und eine Vorrichtung-zu-Vorrichtung-Verbindung (150) zwischen der zweiten drahtlosen Vorrichtung (300b) und der ersten drahtlosen Vorrichtung (300a) beinhaltet; und
Empfangen (S210) von Steuersignalisierung auf der indirekten Funkverbindung (130, 150) von dem Netzwerkknoten (200) nach einem Strahlfunkverbindungsfehler auf der direkten Funkverbindung (120).

7. Verfahren nach Anspruch 6, weiter umfassend:
Durchführen (S212) eines Vorgangs, der mit der Steuersignalisierung verknüpft ist.

8. Verfahren nach Anspruch 6 oder 7, weiter umfassend:
Erfassen (S206) des Strahlfunkverbindungsfehlers der direkten Funkverbindung (120); und
Bereitstellen (S208), in Antwort auf Erfassen des Strahlfunkverbindungsfehlers, einer Meldung des Strahlfunkverbindungsfehlers an den Netzwerkknoten (200) auf der indirekten Funkverbindung (130, 150) über die zweite drahtlose Vorrichtung (300b).

9. Verfahren nach einem der vorstehenden Ansprüche, wobei sich die Steuersignalisierung auf die erste drahtlose Vorrichtung (300a) bezieht, die mindestens eines von Mobilitätsmessungen einer Strahlauffindungsprozedur, einer Übergabe und/oder eines Austausches von Daten mit dem Netzwerkknoten (200) unter Verwendung der indirekten Funkverbindung (130, 150) einleitet.

10. Verfahren nach Anspruch 9, wobei die Übergabe zu einem anderen Strahl des Sendepunkts (240a) oder zu einem Strahl eines anderen Sendepunkts (240b) erfolgt.

11. Verfahren nach Anspruch 9, wobei die Steuersignalisierung die erste drahtlose Vorrichtung (300a) anweist, Daten mit dem Netzwerkknoten (200) unter Verwendung der indirekten Funkverbindung (130, 150) nur im Fall fehlgeschlagener Mobilitätsmessungen oder fehlgeschlagener Übergabe auszutauschen.

12. Verfahren nach einem der vorstehenden Ansprüche, wobei der Strahlfunkverbindungsfehler durch mindestens eines von Bewegung der ersten drahtlosen Vorrichtung (300a), Drehung der ersten drahtlosen Vorrichtung (300a), Blockieren der direkten Funkverbindung (120) und gerichtete Funkinterferenz, die die direkte Funkverbindung (120) beeinträchtigt, verursacht wird.

13. Netzwerkknoten (200), der eine Funkbasisstation ist, zum Behandeln von Strahlfunkverbindungsfehlern, wobei der Netzwerkknoten (200) Verarbeitungsschaltkreis (210) umfasst, wobei der Verarbeitungsschaltkreis konfiguriert ist, den Netzwerkknoten (200) zu veranlassen zum:
Erfassen eines Strahlfunkverbindungsfehlers einer direkten Funkverbindung (120) zwischen einem Sendepunkt (240a) des Netzwerkknotens (200) und einer ersten drahtlosen Vorrichtung (300a), die eine erste Benutzerausrüstung ist,
wobei der Sendepunkt (240a) des Netzwerkknotens (200) konfiguriert ist, die erste drahtlose Vorrichtung (300a) auf der direkten Funkverbindung (120) zu bedienen und eine indirekte Funkverbindung (130, 150) zu der ersten drahtlosen Vorrichtung (300a) über eine zweite drahtlose Vorrichtung (300b) zu haben, die eine zweite Benutzerausrüstung ist, wobei die indirekte Funkverbindung (130, 150) eine direkte Verbindung (130) zwischen dem Sendepunkt (240a) und der zweiten drahtlosen Vorrichtung (300b) und eine Vorrichtung-zu-Vorrichtung-Verbindung (150) zwischen der zweiten drahtlosen Vorrichtung (300b) und der ersten drahtlosen Vorrichtung (300a) beinhaltet; und
Konfigurieren, in Antwort auf Erfassen des Strahlfunkverbindungsfehlers, der ersten drahtlosen Vorrichtung (300a) mit Steuersignalisierung unter Verwendung der indirekten Funkverbindung (130, 150).

14. Drahtlose Vorrichtung (300a) für Betrieb während eines Strahlfunkverbindungsfehlers, wobei die drahtlose Vorrichtung (300a) eine Benutzerausrüstung ist und einen Verarbeitungsschaltkreis (310) umfasst, wobei der Verarbeitungsschaltkreis konfiguriert ist, die drahtlos Vorrichtung (300a) zu veranlassen zum:
Errichten einer direkten Funkverbindung (120) zwischen der drahtlosen Vorrichtung (300a) und einem Sendepunkt (240a) eines Netzwerkknotens (200), der eine Funkbasisstation für den Netzwerkknoten (200) ist, um die drahtlose Vorrichtung (300a) auf der direkten Funkverbindung (120) zu bedienen;
Errichten einer indirekten Funkverbindung (130, 150) zu dem Sendepunkt (240a) über eine zweite drahtlose Vorrichtung (300b), die eine zweite Benutzerausrüstung ist, wobei die indirekte Funkverbindung (130, 150) eine direkte Verbindung (130) zwischen dem Sendepunkt (240a) und der zweiten drahtlosen Vorrichtung (300b) und eine Vorrichtung-zu-Vorrichtung-Verbindung (150) zwischen der zweiten drahtlosen Vorrichtung (300b) und der ersten drahtlosen Vorrichtung (300a) beinhaltet; und
Empfangen von Steuersignalisierung auf der indirekten Funkverbindung (130, 150) von dem Netzwerkknoten (200) nach einem Strahlfunkverbindungsfehler der direkten Funkverbindung (120).

15. Computerprogramm (1120a) zum Behandeln von Strahlfunkverbindungsfehlern, wobei das Computerprogramm Computercode umfasst, der, wenn er auf Verarbeitungsschaltkreis (210) eines Netzwerkknotens (200), der eine Funkbasisstation ist, läuft, den Netzwerkknoten (200) veranlasst zum:
Erfassen (S104) eines Strahlfunkverbindungsfehlers einer direkten Funkverbindung (120) zwischen einem Sendepunkt (240a) des Netzwerkknotens (200) und einer ersten drahtlosen Vorrichtung (300a), die eine erste Benutzerausrüstung ist,
wobei der Sendepunkt (240a) des Netzwerkknotens (200) die erste drahtlose Vorrichtung (300a) auf der direkten Funkverbindung (120) bedient und eine indirekte Funkverbindung (130, 150) zu der ersten drahtlosen Vorrichtung (300a) über eine zweite drahtlose Vorrichtung (300b) hat, die eine zweite Benutzerausrüstung ist, wobei die indirekte Funkverbindung (130, 150) eine direkte Verbindung (130) zwischen dem Sendepunkt (240a) und der zweiten drahtlosen Vorrichtung (300b) und eine Vorrichtung-zu-Vorrichtung-Verbindung (150) zwischen der zweiten drahtlosen Vorrichtung (300b) und der ersten drahtlosen Vorrichtung (300a) beinhaltet; und
Konfigurieren (S106), in Antwort auf Erfassen des Strahlfunkverbindungsfehlers, der ersten drahtlosen Vorrichtung (300a) mit Steuersignalisierung unter Verwendung der indirekten Funkverbindung (130, 150).

16. Computerprogramm (1120b) für Betrieb während eines Strahlfunkverbindungsfehlers, wobei das Computerprogramm Computercode umfasst, der, wenn er auf Verarbeitungsschaltkreis (310) einer drahtlosen Vorrichtung (300a), die eine Benutzerausrüstung ist, läuft, die drahtlose Vorrichtung (300a) veranlasst zum:
Errichten (S202) einer direkten Funkverbindung (120) zwischen der drahtlosen Vorrichtung (300a) und einem Sendepunkt (240a) eines Netzwerkknotens (200), der eine Funkbasisstation für den Netzwerkknoten (200) ist, um die erste drahtlose Vorrichtung (300a) auf der direkten Funkverbindung (120) zu bedienen;
Errichten (S204) einer indirekten Funkverbindung (130, 150) zu dem Sendepunkt (240a) über eine zweite drahtlose Vorrichtung (300b), die eine zweite Benutzerausrüstung ist, wobei die indirekte Funkverbindung (130, 150) eine direkte Verbindung (130) zwischen dem Sendepunkt (240a) und der zweiten drahtlosen Vorrichtung (300b) und eine Vorrichtung-zu-Vorrichtung-Verbindung (150) zwischen der zweiten drahtlosen Vorrichtung (300b) und der ersten drahtlosen Vorrichtung (300a) beinhaltet; und
Empfangen (S210) von Steuersignalisierung auf der indirekten Funkverbindung (130, 150) von dem Netzwerkknoten (200) nach einem Strahlfunkverbindungsfehler der direkten Funkverbindung (120).

## Revendications

1. Procédé de gestion d'une défaillance de liaison faisceau, le procédé étant effectué par un nœud de réseau (200) qui est une station de base radio, le procédé comprenant :
la détection (S104) d'une défaillance de liaison faisceau d'une liaison radio directe (120) entre un point de transmission (240a) du nœud de réseau (200) et un premier dispositif sans fil (300a) qui est un premier équipement utilisateur,
dans lequel le point de transmission (240a) du nœud de réseau (200) dessert le premier dispositif sans fil (300a) sur la liaison radio directe (120) et a une liaison radio indirecte (130, 150) vers le premier dispositif sans fil (300a) via un second dispositif sans fil (300b) qui est un second équipement utilisateur, dans lequel la liaison radio indirecte (130, 150) inclut une liaison directe (130) entre le point de transmission (240a) et le second dispositif sans fil (300b) et une liaison de dispositif à dispositif (150) entre le second dispositif sans fil (300b) et le premier dispositif sans fil (300a) ; et
la configuration (S106), en réponse à la détection de la défaillance de liaison faisceau, du premier dispositif sans fil (300a) avec une signalisation de commande en utilisant la liaison radio indirecte (130, 150).

2. Procédé selon la revendication 1, comprenant en outre :
l'exécution (S108) d'une action pour le premier dispositif sans fil (300a), dans lequel l'action est associée à la signalisation de commande.

3. Procédé selon la revendication 1 ou 2, comprenant en outre :
la configuration (S102) de la liaison radio indirecte (130, 150) entre le premier dispositif sans fil (300a) et le second dispositif sans fil (300b) avant la détection de la défaillance de liaison faisceau de la liaison radio directe (120).

4. Procédé selon l'une quelconque des revendications précédentes, dans lequel la détection de la défaillance de liaison faisceau comprend :
l'obtention (S104a) d'une notification de la défaillance de liaison faisceau à partir du premier dispositif sans fil (300a) sur la liaison radio indirecte (130, 150) via le second dispositif sans fil (300b).

5. Procédé selon l'une quelconque des revendications 1 à 3, dans lequel la détection de la défaillance de liaison faisceau comprend :
la détermination (S104b) de l'absence d'une réponse provenant du premier dispositif sans fil (300a) sur la liaison radio directe (120).

6. Procédé de fonctionnement durant une défaillance de liaison faisceau, le procédé étant effectué par un premier dispositif sans fil (300a) qui est un premier équipement utilisateur, le procédé comprenant :
l'établissement (S202) d'une liaison radio directe (120) entre le premier dispositif sans fil (300a) et un point de transmission (240a) d'un nœud de réseau (200) qui est une station de base radio pour le nœud de réseau (200) pour desservir le premier dispositif sans fil (300a) sur la liaison radio directe (120) ;
l'établissement (S204) d'une liaison radio indirecte (130, 150) vers le point de transmission (240a) via un second dispositif sans fil (300b) qui est un second équipement utilisateur, dans lequel la liaison radio indirecte (130, 150) inclut une liaison directe (130) entre le point de transmission (240a) et le second dispositif sans fil (300b) et une liaison de dispositif à dispositif (150) entre le second dispositif sans fil (300b) et le premier dispositif sans fil (300a) ; et
la réception (S210) d'une signalisation de commande sur la liaison radio indirecte (130, 150) à partir du nœud de réseau (200) lors d'une défaillance de liaison faisceau de la liaison radio directe (120).

7. Procédé selon la revendication 6, comprenant en outre :
l'exécution (S212) d'une action associée à la signalisation de commande.

8. Procédé selon la revendication 6 ou 7, comprenant en outre :
la détection (S206) de la défaillance de liaison faisceau de la liaison radio directe (120) ; et
la fourniture (S208), en réponse à la détection de la défaillance de liaison faisceau, d'une notification de la défaillance de liaison faisceau au nœud de réseau (200) sur la liaison radio indirecte (130, 150) via le second dispositif sans fil (300b).

9. Procédé selon l'une quelconque des revendications précédentes, dans lequel la signalisation de commande concerne le lancement par le premier dispositif sans fil (300a) d'au moins un parmi des mesures de mobilité d'une procédure de recherche de faisceau, un transfert et/ou un échange de données avec le nœud de réseau (200) en utilisant la liaison radio indirecte (130, 150).

10. Procédé selon la revendication 9, dans lequel le transfert est vers un autre faisceau du point de transmission (240a) ou vers un faisceau d'un autre point de transmission (240b).

11. Procédé selon la revendication 9, dans lequel la signalisation de commande donne instruction au premier dispositif sans fil (300a) d'échanger des données avec le nœud de réseau (200) en utilisant la liaison radio indirecte (130, 150) seulement en cas de mesures de mobilité non réussies ou de transfert non réussi.

12. Procédé selon l'une quelconque des revendications précédentes, dans lequel la défaillance de liaison faisceau est provoquée par au moins un parmi un mouvement du premier dispositif sans fil (300a), une rotation du premier dispositif sans fil (300a), un blocage de la liaison radio directe (120) et une interférence radio dirigée affectant la liaison radio directe (120).

13. Nœud de réseau (200) qui est une station de base radio pour la gestion d'une défaillance de liaison faisceau, le nœud de réseau (200) comprenant une circuiterie de traitement (210), la circuiterie de traitement étant configurée pour amener le nœud de réseau (200) à :
détecter une défaillance de liaison faisceau d'une liaison radio directe (120) entre un point de transmission (240a) du nœud de réseau (200) et un premier dispositif sans fil (300a) qui est un premier équipement utilisateur,
dans lequel le point de transmission (240a) du nœud de réseau (200) est configuré pour desservir le premier dispositif sans fil (300a) sur la liaison radio directe (120) et avoir une liaison radio indirecte (130, 150) vers le premier dispositif sans fil (300a) via un second dispositif sans fil (300b) qui est un second équipement utilisateur, dans lequel la liaison radio indirecte (130, 150) inclut une liaison directe (130) entre le point de transmission (240a) et le second dispositif sans fil (300b) et une liaison de dispositif à dispositif (150) entre le second dispositif sans fil (300b) et le premier dispositif sans fil (300a) ; et
configurer, en réponse à la détection de la défaillance de liaison faisceau, le premier dispositif sans fil (300a) avec une signalisation de commande en utilisant la liaison radio indirecte (130, 150).

14. Dispositif sans fil (300a) pour le fonctionnement durant une défaillance de liaison faisceau, le dispositif sans fil (300a) étant un équipement utilisateur et comprenant une circuiterie de traitement (310), la circuiterie de traitement étant configurée pour amener le dispositif sans fil (300a) à :
établir une liaison radio directe (120) entre le premier dispositif sans fil (300a) et un point de transmission (240a) d'un nœud de réseau (200) qui est une station de base radio pour le nœud de réseau (200) pour desservir le dispositif sans fil (300a) sur la liaison radio directe (120) ;
établir une liaison radio indirecte (130, 150) vers le point de transmission (240a) via un second dispositif sans fil (300b) qui est un second équipement utilisateur, dans lequel la liaison radio indirecte (130, 150) inclut une liaison directe (130) entre le point de transmission (240a) et le second dispositif sans fil (300b) et une liaison de dispositif à dispositif (150) entre le second dispositif sans fil (300b) et le premier dispositif sans fil (300a) ; et
recevoir une signalisation de commande sur la liaison radio indirecte (130, 150) à partir du nœud de réseau (200) lors d'une défaillance de liaison faisceau de la liaison radio directe (120).

15. Programme informatique (1120a) pour la gestion d'une défaillance de liaison faisceau, le programme informatique comprenant un code informatique qui, quand il est exécuté sur une circuiterie de traitement (210) d'un nœud de réseau (200) qui est une station de base radio, amène le nœud de réseau (200) à :
détecter (S104) une défaillance de liaison faisceau d'une liaison radio directe (120) entre un point de transmission (240a) du nœud de réseau (200) et un premier dispositif sans fil (300a) qui est un premier équipement utilisateur,
dans lequel le point de transmission (240a) du nœud de réseau (200) dessert le premier dispositif sans fil (300a) sur la liaison radio directe (120) et a une liaison radio indirecte (130, 150) vers le premier dispositif sans fil (300a) via un second dispositif sans fil (300b) qui est un second équipement utilisateur, dans lequel la liaison radio indirecte (130, 150) inclut une liaison directe (130) entre le point de transmission (240a) et le second dispositif sans fil (300b) et une liaison de dispositif à dispositif (150) entre le second dispositif sans fil (300b) et le premier dispositif sans fil (300a) ; et
configurer (S106), en réponse à la détection de la défaillance de liaison faisceau, le premier dispositif sans fil (300a) avec une signalisation de commande en utilisant la liaison radio indirecte (130, 150).

16. Programme informatique (1120a) pour le fonctionnement durant une défaillance de liaison faisceau, le programme informatique comprenant un code informatique qui, quand il est exécuté sur une circuiterie de traitement (310) d'un dispositif sans fil (300a) qui est un équipement utilisateur, amène le dispositif sans fil (300a) à :
établir (S202) une liaison radio directe (120) entre le dispositif sans fil (300a) et un point de transmission (240a) d'un nœud de réseau (200) qui est une station de base radio pour le nœud de réseau (200) pour desservir le dispositif sans fil (300a) sur la liaison radio directe (120) ;
établir (S204) une liaison radio indirecte (130, 150) vers le point de transmission (240a) via un second dispositif sans fil (300b) qui est un second équipement utilisateur, dans lequel la liaison radio indirecte (130, 150) inclut une liaison directe (130) entre le point de transmission (240a) et le second dispositif sans fil (300b) et une liaison de dispositif à dispositif (150) entre le second dispositif sans fil (300b) et le premier dispositif sans fil (300a) ; et
recevoir (S210) une signalisation de commande sur la liaison radio indirecte (130, 150) à partir du nœud de réseau (200) lors d'une défaillance de liaison faisceau de la liaison radio directe (120).
